# EUROPEAN PATENT SPECIFICATION

(11) **EP 2 921 544 B1**
(45) Date of publication and mention of the grant of the patent: **15.11.2017**
(21) Application number: 15158329.1
(22) Date of filing: 10.03.2015
(51) Int. Cl.: C09K 19/30, C09K 19/12, C09K 19/04

(54) **LIQUID CRYSTAL COMPOSITION AND LIQUID CRYSTAL DISPLAY DEVICE INCLUDING THE SAME**
FLÜSSIGKRISTALLZUSAMMENSETZUNG UND FLÜSSIGKRISTALLANZEIGEVORRICHTUNG DAMIT
ENSEMBLE DE PANNEAU À CRISTAUX LIQUIDES ET APPAREIL D'AFFICHAGE À CRISTAUX LIQUIDES DOTÉ DE CELUI-CI

(30) Priority: 19.03.2014 KR 20140032368
(43) Date of publication of application: 23.09.2015
(73) Proprietor: Samsung Display Co., Ltd., Gyeonggi-do (KR)
(72) Inventor: Park, Joon-Hyung, 406-606, 110 Seoul (KR); Kwon, Sun Young, 6 Seoul (KR); Kim, Min-Jae, 302-502 Suwon-si, Gyeonggi-do (KR); Kim, Min-Hee, 105-303 Ansan-si, Gyeonggi-do (KR); Oh, Keun Chan, 101-702 Cheonan-si, Chungcheongnam-do (KR); Lee, Kyung Hee, 110-802 Suwon-si, Gyeonggi-do (KR); Jeong, Kang Seob, 105-1003 Seongnam-si, Gyeonggi-do (KR); Tak, Kyung Seon, No. 305, 48-6 Hwaseong-si, Gyeonggi-do (KR); Son, Jong Ho, 102-104 Seoul (KR)
(74) Representative: Dr. Weitzel & Partner

(56) References cited:
- US-A1- 2009 103 011
- US-A1- 2012 228 549
- US-A1- 2013 114 034
- US-A1- 2013 335 693

## Description

This application claims priority to Korean Patent Application No. 10-2014-0032368 filed on March 19, 2014.

### BACKGROUND

### (a) Field

The present invention relates to a liquid crystal composition and a liquid crystal display including the same.

### (b) Description of the Related Art

A liquid crystal display element is used in watches, electronic calculators, various home appliances, measurement devices, panels for vehicles, word processors, electronic schedulers, printers, computers, televisions, and the like.

Representative examples of a liquid crystal display method may include a twisted nematic ("TN") type, a super twisted nematic ("STN") type, a dynamic light scattering ("DLS") type, a guest and host ("GH") type, an in-plane switching ("IPS") type, an optically compensated birefringence ("OCB") type, an electrically controlled birefringence ("ECB") type, a vertical alignment ("VA") type, a color super homeotropic ("CSH") type, a ferroelectric liquid crystal ("FLC"), and the like. Further, multiplex driving is generally used in known static driving as a driving method, such that a simple matrix method and, currently, an active matrix (AM) method performing driving by a thin film transistor ("TFT"), a thin film diode ("TFD"), or the like are mainly used.

Of the display methods, the IPS type, the ECB type, the VA type, the CSH type or the like, are characterized in that a liquid crystal material having negative dielectric anisotropy (Δε) is used, unlike a current general TN type or STN type. Among the display methods, the VA type liquid crystal display adopting AM driving, is used in a display element requiring a wide viewing angle.

Low voltage driving, a high speed response, and a wide operation temperature range are characteristics of the liquid crystal material based upon the VA type of liquid crystal display and the like. That is, for VA type displays, dielectric anisotropy is negative, an absolute value is high, viscosity is low, and a nematic phase-isotropic liquid phase transition temperature (Tni) is high. Further, when Δn × d is set, that is a multiple of refractive anisotropy (An) and a cell gap d, the refractive anisotropy of the liquid crystal material needs to be controlled within an appropriate range so as to correspond to the cell gap.

In addition, the cell gap of the display element may be small in order to implement a high speed response, but there is a limit to the reduction of the cell gap. It is useful for the liquid crystal composition having a predetermined physical characteristic to be used in order to improve the response speed while the cell gap is not changed. Particularly, in a display device outputting a three-dimensional ("3D") image, a high speed response property is important such that the physical property of the liquid crystal composition is important.
Reference is made to US 2009/103011 A1 forming the preamble of claim 1.
It is the object of the present invention to maintain viscosity of a liquid crystal layer even if the neutral liquid crystal compound does not include an alkenyl group. This object is achieved by the subject matter of the characterizing portion of independent claim 1 and also by the subject matter of independent claim 7.

### SUMMARY

The present invention provides a liquid crystal composition having a predetermined physical property as well as a fast response speed, and a liquid crystal display including the same.

In exemplary embodiments, a liquid crystal composition includes: a first category compound; and a second category compound, where the first category compound includes a first compound represented by Chemical Formula 1 and a second compound represented by Chemical Formula 2.

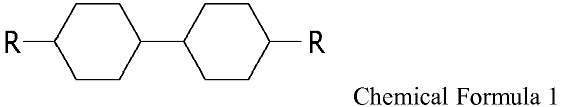

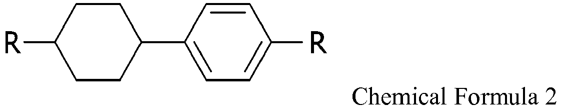

In Chemical Formula 1 and Chemical Formula 2, each R is independently an alkyl group having a carbon number of 1 to 7, and each R is the same or different.

The second category compound includes a third compound represented by Chemical Formula 3 and a fourth compound represented by Chemical Formula 4.

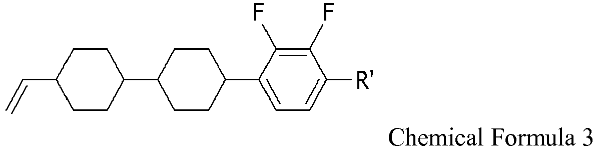

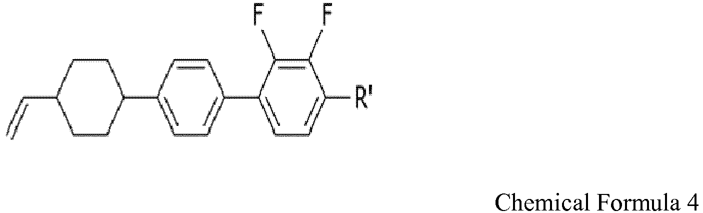

In Chemical Formula 3 and Chemical Formula 4, R and R' are independently an alkyl group with a carbon number of 1 to 7, and R and R' are the same or different.

The second category compound further includes at least one of a fifth compound represented by Chemical Formula 5, a sixth compound represented by Chemical Formula 6, a seventh compound represented by Chemical Formula 7, and an eighth compound represented by Chemical Formula 8.

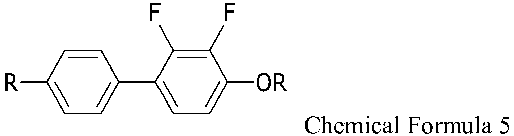

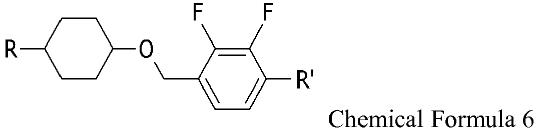

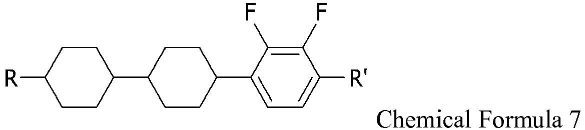

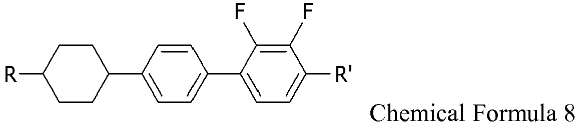

In Chemical Formula 5 to Chemical Formula 8, R and R' are independently an alkyl group with a carbon number of 1 to 7, and R and R' are the same or different.

The liquid crystal composition includes each of the first compound to the eighth compound.

The R group of the first compound and the R group of the second compound are alkyl groups of two or more kinds having different carbon numbers.

A ninth compound represented by Chemical Formula 9 is further included.

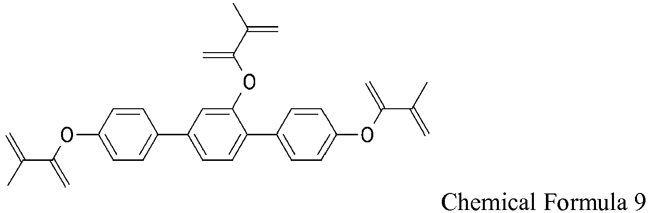

A tenth compound represented by Chemical Formula 10 is further included.

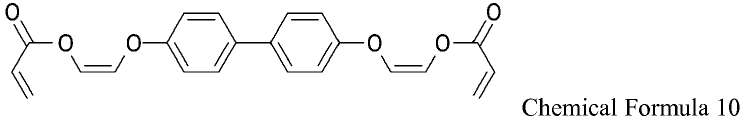

A sum of an amount of the third compound, the fourth compound, the seventh compound, and the eighth compound is greater than about 35 weight percent (wt%), and a sum of the amount of the third compound and the fourth compound is less than about 35 wt%, based on the total weight of the liquid crystal composition.

The amount of the first compound is about 20 wt% to about 35 wt%, the amount of the second compound is about 5 wt% to about 15 wt%, the amount of the fifth compound is about 10 wt% to about 14 wt%, and the amount of the sixth compound is about 5 wt% to about 9 wt%.

The sum of the amount of the ninth compound and the tenth compound is about 4000 ppm, and a weight ratio of the tenth compound to the ninth compound is greater than about 0.1.

A rotation viscosity (γ) of the liquid crystal composition is about 95 millipascal seconds (mPaS) to about 105 mPaS, an elastic coefficient (K33) of the liquid crystal composition is about 15 pico newton (pN) to about 19 pN, and dielectric anisotropy (Δε) of the liquid crystal composition is about 2.8 to 3.4.

In exemplary embodiments, a liquid crystal display includes: a first substrate; a second substrate facing the first substrate; a field generating electrode formed on at least one of the first substrate and the second substrate; and a liquid crystal layer between the first substrate and the second substrate, where the liquid crystal layer includes a liquid crystal composition, and where the liquid crystal composition includes a first category compound, and a second category compound, the first category compound including a first compound represented by Chemical Formula 1 and a second compound represented by Chemical Formula 2.

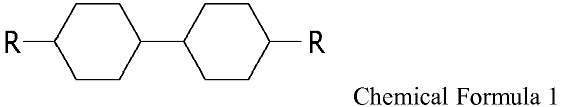

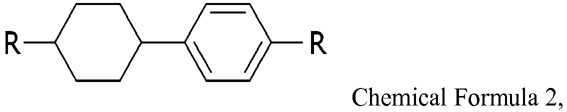

In Chemical Formula 1 and Chemical Formula 2, each R is independently an alkyl group having a carbon number of 1 to 7, and each R is the same or different.

The second category compound includes a third compound represented by Chemical Formula 3 and a fourth compound represented by Chemical Formula 4.

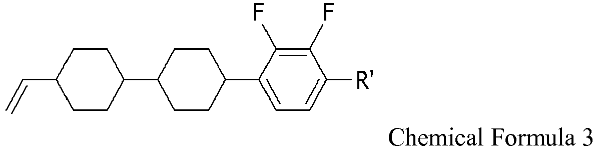

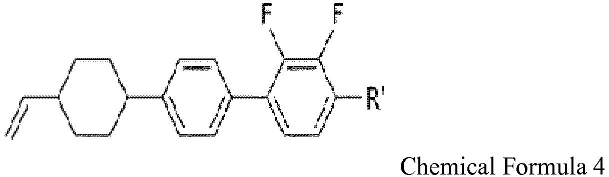

In Chemical Formula 3 and Chemical Formula 4, R and R' are independently an alkyl group with a carbon number of 1 to 7, and R and R' are the same or different).

The second category compound further includes at least one of a fifth compound represented by Chemical Formula 5, a sixth compound represented by Chemical Formula 6, a seventh compound represented by Chemical Formula 7, and an eighth compound represented by Chemical Formula 8.

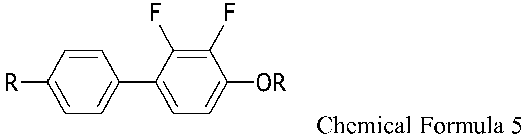

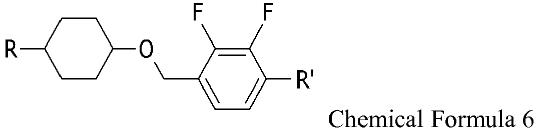

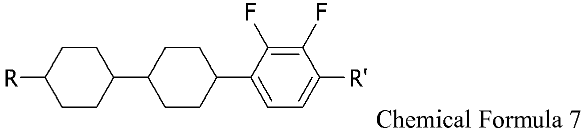

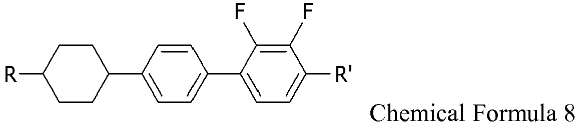

In Chemical Formula 5 to Chemical Formula 8, R and R' are independently the alkyl group with a carbon number of 1 to 7, and R and R' are the same or different.

The R of the first compound and the R of the second compound are alkyl groups of two or more kinds with different carbon numbers.

The liquid crystal molecules further include a ninth compound represented by Chemical Formula 9 and a tenth compound represented by Chemical Formula 10.

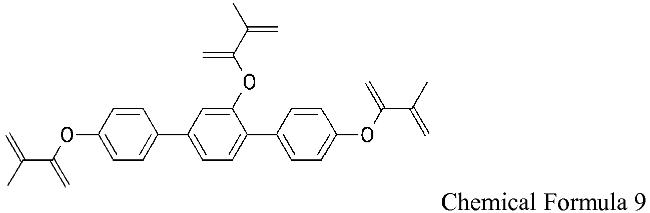

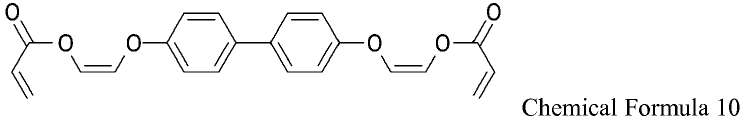

The liquid crystal molecules include each of the first compound to the tenth compound, and a sum of an amount of the third compound, the fourth compound, the seventh compound, and the eighth compound is greater than about 35 wt%, and a sum of an amount of the third compound and the fourth compound is less than about 35 wt%, based on a total weight of the liquid crystal composition.

An amount of the first compound is about 20 wt% to about 35 wt%, an amount of the second compound is about 5 wt% to about 15 wt%, an amount of the fifth compound is about 10 wt% to about 14 wt%, and an amount of the sixth compound is about 5 wt% to about 9 wt%, based on the total weight of the liquid crystal composition.

The sum of an amount of the ninth compound and the tenth compound is about 4000 ppm, and a weight ratio of the tenth compound to the ninth compound is greater than about 0.1.

A rotation viscosity (γ) of the liquid crystal composition is about 95 mPaS to about 105 mPaS, an elastic coefficient (K33) of the liquid crystal composition is about 15 pN to about 19 pN, and dielectric anisotropy (Δε) of the liquid crystal composition is about 2.8 to about 3.4.

According to an exemplary embodiment, by using the new liquid crystal composition, a liquid crystal display having improved response speed is provided. Also, the linear afterimage and the stain generated in the liquid crystal display is reduced. Further, a 3D display device providing both the right eye image and the left eye image may be realized.

### BRIEF DESCRIPTION OF THE DRAWINGS

The above and other aspects, advantages and features of this disclosure will become more apparent by describing in further detail exemplary embodiments thereof with reference to the accompanying drawings, in which:
FIG. 1 is an illustration of a process used to provide a pretilt to liquid crystal molecules by irradiating the liquid crystal molecules with ultraviolet rays.
FIG. 2 is a circuit diagram of one pixel of an exemplary embodiment of a liquid crystal display.
FIG. 3 is a plan view of one pixel of an exemplary embodiment of a liquid crystal display.
FIG. 4 is a cross-sectional view taken along line IV-IV of FIG. 3.
FIG. 5 is a view of an exemplary embodiment of a base structure of the pixel shown in FIG. 3.
FIG. 6 is a block diagram of an exemplary embodiment of a stereoscopic image display device.
FIG. 7 is a graph illustrating a voltage holding ratio versus time for a comparative example and an exemplary embodiment.
FIG. 8 is a linear afterimage of a comparative example.
FIG. 9 is a graph illustrating the pretilt change for a comparative example and an exemplary embodiment as measured by lateral transmittance (%) versus electric field ultraviolet ("UV") energy (Joules).

### DETAILED DESCRIPTION

Hereinafter, exemplary embodiments of the present invention will be described in detail with reference to the accompanying drawings, in which various embodiments are shown. This invention may, however, be embodied in many different forms, and should not be construed as limited to the embodiments set forth herein. Rather, these embodiments are provided to make disclosed contents thorough and complete and to sufficiently transfer the present invention to those skilled in the art.

In the drawings, the thickness of layers, films, panels, regions, etc., are exaggerated for clarity. It will be understood that when an element or layer is referred to as being "on" another element or layer, it can be directly on the other element or layer, or intervening elements may also be present therebetween. In contrast, when an element is referred to as being "directly on" another element, there are no intervening elements present. Like reference numerals designate like elements throughout the specification.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

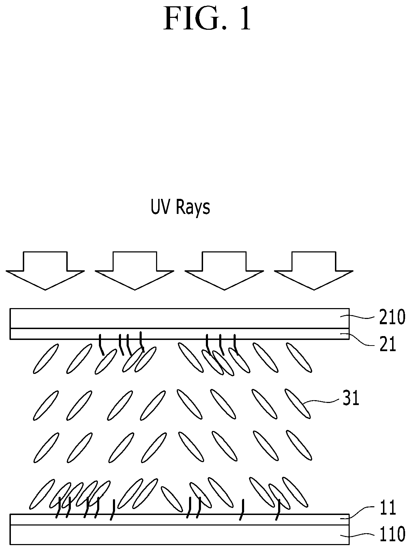

A process of providing a pretilt to liquid crystal molecules and forming an alignment layer will now be described with reference to FIG. 1 and FIG. 3 to FIG. 6. FIG. 1 is an illustration of a process to provide a pretilt to liquid crystal molecules by irradiating the liquid crystal molecules with ultraviolet (UV) rays.

A compound that is polymerized by light such as ultraviolet rays is injected along with liquid crystal molecules between two display panels 100 and 200. In an exemplary embodiment, the compound may be a reactive mesogen such as a ninth compound or a tenth compound, which will be described hereinafter. The compound including the ninth compound to the tenth compound may be a reactive mesogen that is polymerized by light such as ultraviolet rays.

Next, a first subpixel electrode 191a and a second subpixel electrode 191b are applied with a data voltage and a common voltage is applied to a common electrode 270 of the upper panel 200 to generate an electric field to a liquid crystal layer 3 between the two display panels 100 and 200. Thus, liquid crystal molecules 31 of the liquid crystal layer 3 are inclined in the direction parallel to the length direction of minute branches 194a, 194b, 194c, and 194d in response to the electric field, and the liquid crystal molecules 31 in one pixel PX are inclined in a total of four directions.

After generating the electric field to the liquid crystal layer 3, if the light such as ultraviolet rays is irradiated, the reactive mesogen is polymerized to form polymers connected with the display panels 100 and 200. The alignment direction of the liquid crystal molecules 31 is determined to have the pretilt in the direction prescribed by the polymers, as shown in FIG. 1.

Also, the irradiation of ultraviolet rays may be performed in two steps.

A UV exposure process of applying the electric field is performed. A fluorescence exposure process of hardening or consuming the reactive mesogen that is not reacted in the electric field exposure process is subsequently performed while the electric field is not applied.

The liquid crystal molecules and the reactive mesogen forming the liquid crystal layer 3 are described as follows.

In an exemplary embodiment, a liquid crystal composition includes a neutral liquid crystal compound (referred to as "a first category compound") without dielectric anisotropy and a polar liquid crystal compound (referred to as "a second category compound") having dielectric anisotropy.

The first category compound includes a first compound represented by Chemical Formula 1 and a second compound represented by Chemical Formula 2.

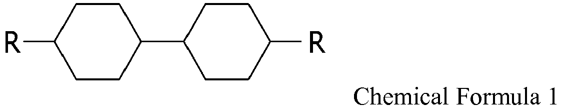

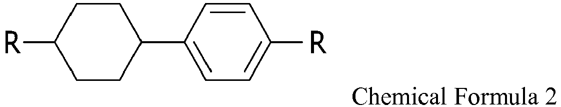

In Chemical Formula 1 and Chemical Formula 2, each R is independently an alkyl group with a carbon number of 1 to 7, and each R may be the same or different.

In detail, Chemical Formula 1 includes two alkyl groups, and the two alkyl groups may have different carbon numbers. Chemical Formula 2 also includes two alkyl groups, and the two alkyl groups may have different carbon numbers. The alkyl groups respectively included in Chemical Formulas 1 and 2 may also have the same carbon number.

Also, the first compound and the second compound may include a compound having two or more different alkyl groups.

In an exemplary embodiment, the first compound may include an alkyl group having two or three carbons. In another exemplary embodiment, the first compound may include an alkyl group having four carbons. The same applies for the second compound. As described above, in exemplary embodiments, the liquid crystal composition including the first compound or the second compound including two or more different alkyl groups may improve stability of the liquid crystal molecules.

The second category compound may include a third compound represented by Chemical Formula 3 and a fourth compound represented by Chemical Formula 4.

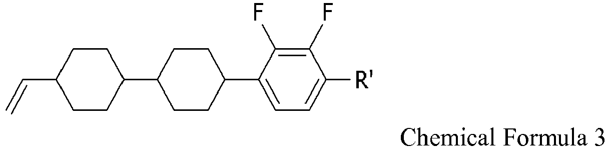

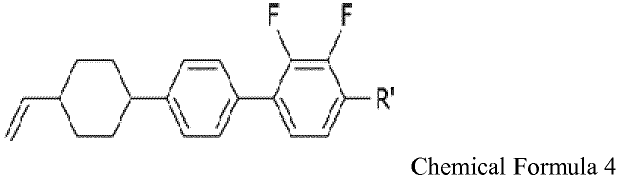

In Chemical Formula 3 and Chemical Formula 4, R and R' are independently an alkyl group with a carbon number of 1 to 7, and R and R' may be the same or different.

The liquid crystal composition including the third compound and the fourth compound of a predetermined content may appropriately maintain viscosity of the liquid crystal layer even if the neutral liquid crystal compound does not include an alkenyl group.

The second category compound may further include at least one of a fifth compound represented by Chemical Formula 5, a sixth compound represented by Chemical Formula 6, a seventh compound represented by Chemical Formula 7, and an eighth compound represented by Chemical Formula 8.

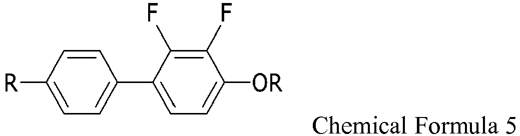

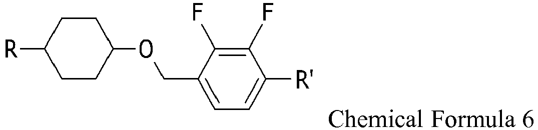

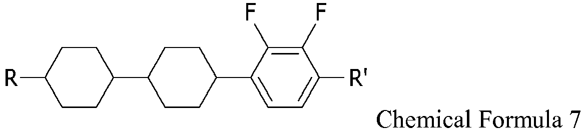

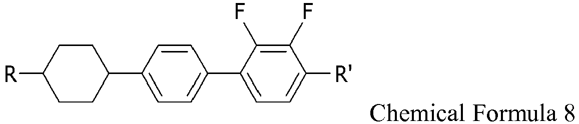

In Chemical Formula 5 to Chemical Formula 8, R and R' are independently an alkyl group with a carbon number of 1 to 7, and R and R' may be the same or different. The fifth compound to the eighth compound are included in the liquid crystal composition to increase the stability of the liquid crystal layer, and may have an appropriate content to maintain the stability of the liquid crystal composition.

The liquid crystal composition may further include a ninth compound represented by Chemical Formula 9 and a tenth compound represented by Chemical Formula 10.

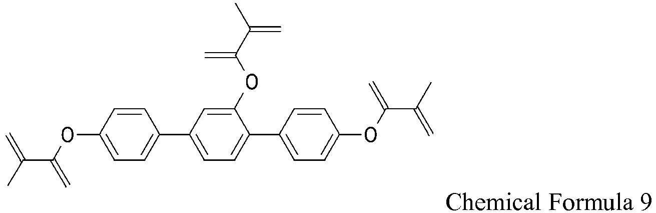

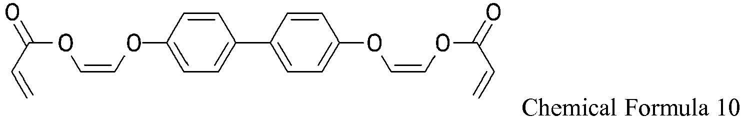

The ninth compound and the tenth compound are reactive mesogen compounds, and the reactive mesogen may be formed into an alignment layer in the UV irradiation process.

The ninth compound as a highly reactive mesogen includes a terphenyl and methacrylate moieties having many reactive sites.

The tenth compound is an acryl-based compound and a predetermined amount may remain in the liquid crystal layer after the formation of the liquid crystal layer has been completed.

In exemplary embodiments, the liquid crystal composition may include each one of the first compound to the tenth compound. The first and second compounds as the first category compounds are neutral liquid crystal compounds, the third to eighth compounds as the second category compounds are polar liquid crystal compounds, and the ninth and tenth compounds are the reactive mesogens. The reactive mesogens form the pretilt.

In the exemplary liquid crystal composition, an amount of the first compound may be about 20 wt% to about 35 wt%, an amount of the second compound may be about 5 wt% to about 15 wt%, an amount of the third compound may be about 10 wt% to about 14 wt%, an amount of the fourth compound may be about 12 wt% to about 16 wt%, an amount of the fifth compound may be about 10 wt% to about 14 wt%, an amount of the sixth compound may be about 5 wt% to about 9 wt%, an amount of the seventh compound may be about 6 wt% to about 10 wt%, and an amount of the eighth compound may be about 8 wt% to about 12 wt%. The wt% is based on the total weight of the liquid crystal composition.

Specifically, the contents of the third compound, the fourth compound, the seventh compound, and the eighth compound may be controlled to be greater than about 35 wt%, and a sum of the contents of the third compound and the fourth compound may be controlled to be less than about 35 wt%, based on the total weight of the liquid crystal composition. This is to improve the stability of the liquid crystal layer and to maintain the viscosity of the liquid crystal layer with the predetermined degree.

Also, for appropriate solubility of the polar liquid crystal composition, the amount of the seventh compound and the eighth compound based on the total amount of the polar liquid crystal composition, may also be controlled.

Further, the sum of the contents of the ninth compound and the tenth compound may be about 4000 parts per million (ppm) and the content of the tenth compound may be about 50 to 200 ppm, based on the total amount of the liquid crystal composition. In an exemplary embodiment, a content (weight) ratio of the tenth compound to the ninth compound may be more than about 0.1, and specifically, the content ratio of the tenth compound to the ninth compound may be about 0.2 to 0.3.

In some exemplary embodiments, the liquid crystal composition includes both of the ninth compound and the tenth compound, however in other exemplary embodiments, the liquid crystal composition may include only the ninth compound.

The liquid crystal composition including the first compound to the tenth compound may have physical properties as follows.

A rotation viscosity (γ) of the liquid crystal composition may be about 95 to about 105 millipascal seconds (mPaS), an elastic coefficient (K33) of the liquid crystal composition may be about 15 to about 19 piconewton (pN), and a ratio of the elastic coefficient to the rotation viscosity of the liquid crystal composition may be less than about 7.0.

Also, dielectric anisotropy (Δε) of the liquid crystal composition may be about 2.8 to about 3.4.

Further, in determining Δn×d, as a multiplication of refractive anisotropy (An) and a cell gap (d) of the liquid crystal composition, the refractive anisotropy of the liquid crystal material may be controlled to have a predetermined value to be suitable for the cell gap. Also, the multiplication of the refractive anisotropy Δn and the cell gap d may be controlled such that the cell gap d may be about 315 nanometers (nm) to about 365 nm.

The liquid crystal composition having these physical properties and these contents demonstrate improved response speed, and thereby may be used in a three-dimensional (3D) display device requiring the high speed response physical properties. Also, since the first category compound including the neutral liquid crystal compound does not include an alkenyl group, a linear afterimage, stains, or a reactivity deterioration of the reactive mesogen due to the alkenyl group may be improved.

Chemical Formulas and the contents of the described first compound to eighth compound a represented as shown in Table 1.

**Table 1**

| Kind | Chemical Formula | Content (wt%) |
|---|---|---|
| First compound (Chemical Formula 1) | 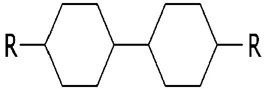 | 20-35 |
| Second compound (Chemical Formula 2) | 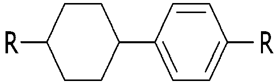 | 5-15 |
| Third compound (Chemical Formula 3) | 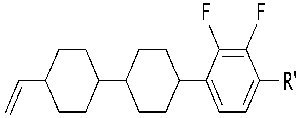 | 10-14 |
| Fourth compound (Chemical Formula 4) | 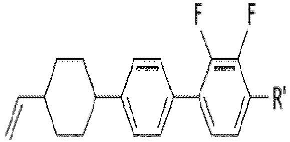 | 12-16 |
| Fifth compound (Chemical Formula 5) | 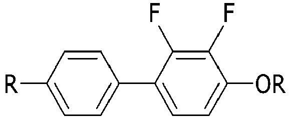 | 10-14 |
| Sixth compound (Chemical Formula 6) | 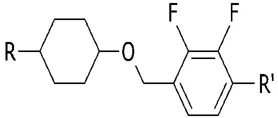 | 5-9 |
| Seventh compound (Chemical Formula 7) | 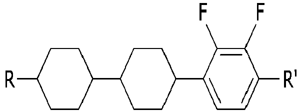 | 6-10 |
| Eighth compound (Chemical Formula 8) | 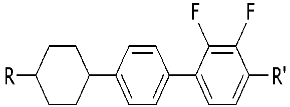 | 8-12 |

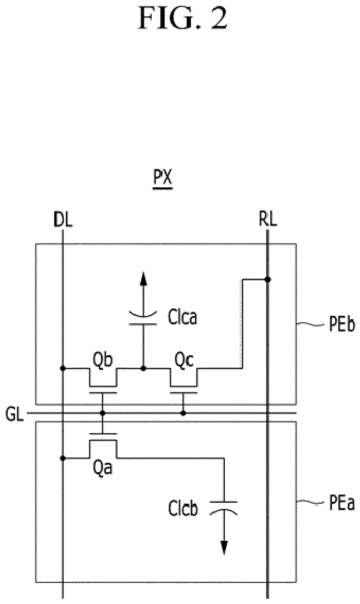

A liquid crystal display including the above-described liquid crystal composition, signal lines, and pixel arrangement of a display device, and a driving method thereof, will be described with reference to FIG. 2. FIG. 2 is a circuit diagram of a pixel of an exemplary embodiment of a liquid crystal display.

Referring to FIG. 2, in an exemplary embodiment, one pixel PX of the liquid crystal display includes a plurality of signal lines including a gate line GL for transferring a gate signal, a data line DL for transferring a data signal, and a voltage division reference voltage line RL for transferring a voltage division reference voltage, first, second, and third switching elements Qa, Qb, and Qc, and first and second liquid crystal capacitors Clca and Clcb connected to the plurality of signal lines.

The first and second switching elements Qa and Qb are connected to the gate line GL and the data line DL, respectively, and the third switching element Qc is connected to the output terminal of the second switching element Qb and the voltage division reference voltage line RL.

The first switching element Qa and the second switching element Qb are three-terminal elements, such as a thin film transistor (TFT), control terminals thereof are connected to the gate line GL, input terminals thereof are connected to the data line DL, an output terminal of the first switching element Qa is connected to a first liquid crystal capacitor Clca, and an output terminal of the second switching element Qb is connected to a second liquid crystal capacitor Clcb and an input terminal of the third switching element Qc.

The third switching element Qc is also a three-terminal element, such as a thin film transistor, and a control terminal thereof is connected to the gate line GL, the input terminal thereof is connected to the second liquid crystal capacitor Clcb, and an output terminal thereof is connected to the voltage division reference voltage line RL.

When a gate-on signal is applied to the gate line GL, the first switching element Qa, the second switching element Qb, and the third switching element Qc connected to the gate line GL are turned on. Accordingly, a data voltage applied to the data line DL is applied to a first subpixel electrode PEa and a second subpixel electrode PEb through the turned-on first switching element Qa and second switching element Qb. In this case, the data voltages applied to the first subpixel electrode PEa and the second subpixel electrode PEb are the same, and the first liquid crystal capacitor Clca and the second liquid crystal capacitor Clcb are charged to the same value as that of a difference between the common voltage and the data voltage. Similar to this, the voltage charged in the second liquid crystal capacitor Clcb is divided through the turned-on third switching element. Accordingly, the voltage value charged in the second liquid crystal capacitor Clcb is decreased by a difference between the common voltage and the voltage division reference voltage. That is, the voltage charged in the first liquid crystal capacitor Clca is higher than a voltage charged in the second liquid crystal capacitor Clcb.

As described above, the voltage charged in the first liquid crystal capacitor Clca and the voltage charged in the second liquid crystal capacitor Clcb become different from each other. Since the voltage of the first liquid crystal capacitor Clca and the voltage of the second liquid crystal capacitor Clcb are different from each other, inclination angles of liquid crystal molecules in the first subpixel and the second subpixel become different from each other, so that luminance of the two subpixels become different from each other. Accordingly, when the voltage of the first liquid crystal capacitor Clca and the voltage of the second liquid crystal capacitor Clcb are appropriately adjusted, an image recognized at a lateral side may become close to an image recognized at a front side as closely as possible, thereby improving lateral side visibility.

In the illustrated exemplary embodiment, in order to make the voltage charged in the first liquid crystal capacitor Clca and the voltage charged in the second liquid crystal capacitor Clcb be different from each other, the liquid crystal display includes the third switching element Qc connected to the second liquid crystal capacitor Clcb and the voltage division reference voltage line RL. In another exemplary embodiment, the second liquid crystal capacitor Clcb may be connected to a step-down capacitor.

Particularly, the liquid crystal display includes the third switching element Qc including a first terminal connected to a step-down gate line, a second terminal connected to the second liquid crystal capacitor Clcb, and a third terminal connected to the step-down capacitor, and a part of the amount of charge charged in the second liquid crystal capacitor Clcb is charged in the step-down capacitor, so that the charging voltages between the first liquid crystal capacitor Clcb and the second liquid crystal capacitor Clcb may be differently set. Further, in an exemplary embodiment, the first liquid crystal capacitor Clca and the second liquid crystal capacitor Clcb are connected to different data lines and receive different data voltages, so that the charging voltages between the first liquid crystal capacitor Clca and the second liquid crystal capacitor Clcb may be differently set. In addition, the charging voltages between the first liquid crystal capacitor Clca and the second liquid crystal capacitor Clcb may be differently set by various other methods.

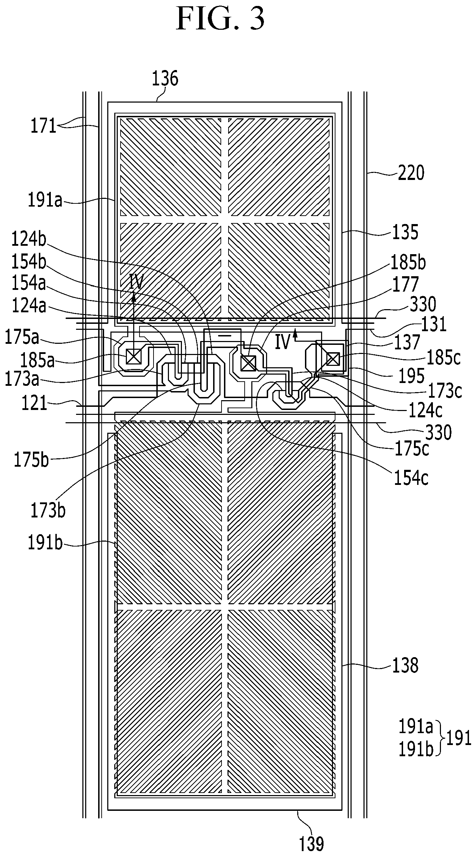

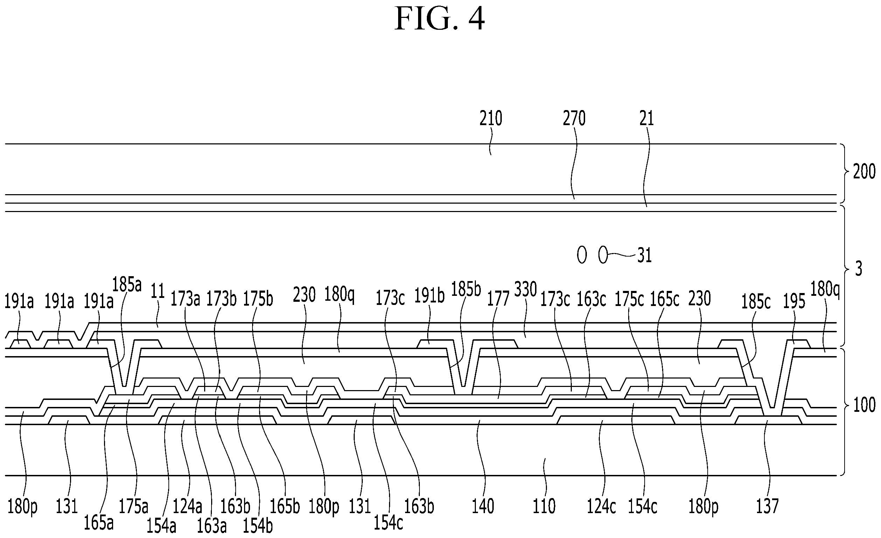

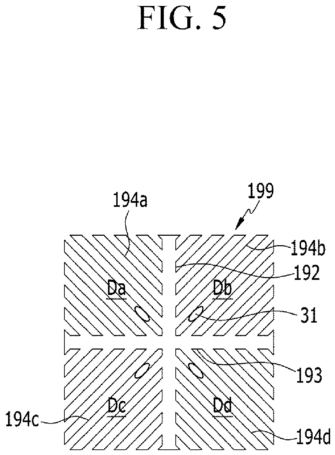

Now, an exemplary embodiment of a structure of the liquid crystal display illustrated in FIG. 2 will be briefly described with reference to FIGs. 3 to 5. FIG. 3 is a plan view of an exemplary embodiment of one pixel of the liquid crystal display, and FIG. 4 is a cross-sectional view illustrating the exemplary liquid crystal display taken along line IV-IV of FIG. 3. FIG. 5 is a top plan view of a base region of an exemplary pixel electrode of a liquid crystal display.

Referring to FIG. 3 and FIG. 4, the exemplary liquid crystal display includes the lower display panel 100 and the upper display panel 200 which face each other, the liquid crystal layer 3 interposed between the two display panels 100 and 200, and a pair of polarizers (not illustrated) attached at outer surfaces of the display panels 100 and 200.

First, the lower display panel 100 will be described.

A gate conductor including a gate line 121 and a voltage division reference voltage line 131 is formed on an insulating substrate 110 formed of transparent glass, plastic, or the like.

The gate line 121 includes a first gate electrode 124a, a second gate electrode 124b, a third gate electrode 124c, and a wide end portion (not illustrated) for connection to another layer or an external driving circuit.

The voltage division reference voltage line 131 includes first storage electrodes 135 and 136, and a reference electrode 137. Second storage electrodes 138 and 139, which are not connected to the voltage division reference voltage line 131 but overlap the second subpixel electrode 191b, are positioned on the lower panel 100.

A gate insulating layer 140 is formed on the gate line 121 and the voltage division reference voltage line 131.

A first semiconductor 154a, a second semiconductor 154b, and a third semiconductor 154c are formed on the gate insulating layer 140.

A plurality of ohmic contacts 163a, 165a, 163b, 165b, 163c, and 165c are formed on the semiconductors 154a, 154b, and 154c.

A plurality of data lines 171 including a first source electrode 173a and a second source electrode 173b, and data conductors including a first drain electrode 175a, a second drain electrode 175b, a third source electrode 173c, and a third drain electrode 175c are formed on the ohmic contacts 163a, 165a, 163b, 165b, 163c, and 165c and the gate insulating layer 140.

The data conductors, and the semiconductors and the ohmic contacts positioned under the data conductors, may be simultaneously formed by using one mask.

The data line 171 includes a wide end portion (not illustrated) for connection with another layer or an external driving circuit.

The first gate electrode 124a, the first source electrode 173a, and the first drain electrode 175a form a first thin film transistor Qa together with the first semiconductor 154a, and a channel of the thin film transistor is formed at the semiconductor 154a between the first source electrode 173a and the first drain electrode 175a. Similarly, the second gate electrode 124b, the second source electrode 173b, and the second drain electrode 175b form a second thin film transistor Qb together with the second semiconductor 154b, and a channel of the thin film transistor is formed at the semiconductor 154b between the second source electrode 173b and the second drain electrode 175b. The third gate electrode 124c, the third source electrode 173c, and the third drain electrode 175c form a third thin film transistor Qc together with the third semiconductor 154c, and a channel of the thin film transistor is formed at the semiconductor 154c between the third source electrode 173c and the third drain electrode 175c.

The second drain electrode 175b is connected with the third source electrode 173c, and includes an extended portion 177 that is widely extended.

A first passivation layer 180p is formed on the data conductors 171, 173c, 175a, 175b, and 175c and exposed portions of the semiconductors 154a, 154b, and 154c. The first passivation layer 180p may include an inorganic insulating layer, such as a silicon nitride or a silicon oxide. The first passivation layer 180p may prevent a pigment of a color filter 230 from flowing into the exposed portions of the semiconductors 154a, 154b, and 154c.

The color filter 230 is formed on the first passivation layer 180p. The color filter 230 is extended in a vertical direction along two adjacent data lines. A first light blocking member 220 is positioned on the first passivation layer 180p, an edge of the color filter 230, and the data line 171.

The first light blocking member 220 is extended in the data line 171, and is positioned between two adjacent color filters 230. A width of the first light blocking member 220 may be larger than a width of the data line 171. As described above, the width of the first light blocking member 220 is formed to be larger than the width of the data line 171, so that the first light blocking member 220 may prevent light incident from the outside from being reflected from a surface of the metal data line 171. Accordingly, the light reflected from the surface of the data line 171 interferes with light passing through the liquid crystal layer 3, thereby preventing a contrast ratio of the liquid crystal display from being decreased.

A second passivation layer 180q is formed on the color filter 230 and the first light blocking member 220.

The second passivation layer 180q may include an inorganic insulating layer, such as a silicon nitride or a silicon oxide. The second passivation layer 180q prevents the color filter 230 from being peeled, and suppresses contamination of the liquid crystal layer 3 by an organic material such as a solvent flowing in from the color filter 230, thereby preventing defects such as an afterimage that may occur when a screen is driven.

A first contact hole 185a and a second contact hole 185b exposing the first drain electrode 175a and the second drain electrode 175b are formed in the first passivation layer 180p and the second passivation layer 180q, respectively.

A third contact hole 185c exposing a part of the reference electrode 137 and a part of the third drain electrode 175c is formed in the first passivation layer 180p, the second passivation layer 180q, and the gate insulating layer 140, and the third contact hole 185c is covered by a connecting member 195. The connecting member 195 electrically connects the reference electrode 137 and the third drain electrode 175c exposed through the third contact hole 185c.

A plurality of pixel electrodes 191 are formed on the second passivation layer 180q. Each pixel electrode 191 includes the first subpixel electrode 191a and the second subpixel electrode 191b which are separated from each other with the gate line 121 interposed therebetween, and are adjacent in a column direction based on the gate line 121. The pixel electrode 191 may be made of a transparent material such as indium tin oxide ("ITO") or indium zinc oxide ("IZO"). The pixel electrode 191 may be made of a transparent conductive material such as ITO or IZO, or a reflective metal such as aluminum, silver, chromium, or an alloy thereof.

Each of the first subpixel electrode 191a and the second subpixel electrode 191b includes one or more basic electrodes illustrated in FIG. 5, or a modification of the basic electrode.

The first subpixel electrode 191a and the second subpixel electrode 191b are physically and electrically connected to the first drain electrode 175a and the second drain electrode 175b through the first contact hole 185a and the second contact hole 185b, respectively, and receive the data voltage from the first drain electrode 175a and the second drain electrode 175b, respectively. In this case, a part of the data voltage applied to the second drain electrode 175b is divided through the third source electrode 173c, so that a size of the voltage applied to the first subpixel electrode 191a may be larger than that of the voltage applied to the second subpixel electrode 192b.

The first subpixel electrode 191a and the second subpixel electrode 191b, to which the data voltage is applied, generate an electric field in conjunction with the common electrode 270 of the upper panel 200 to determine a direction of the liquid crystal molecules 31 of the liquid crystal layer 3 between the two pixel electrodes 191 and 270. The luminance of light passing through the liquid crystal layer 3 is changed according to the thusly-determined direction of the liquid crystal molecules 31.

A second light blocking member 330 is positioned on the pixel electrode 191. The second light blocking member 330 is formed to cover all of the regions in which the first transistor Qa, the second transistor Qb, the third transistor Qc, and the first to third contact holes 185a, 185b, and 185c are positioned, and is positioned to be extended in the same direction as that of the gate line 121 to overlap a part of the data line 171. The second light blocking member 330 may be positioned so as to overlap at least a part of two data lines 171 which are positioned at both sides of a region of one pixel, to prevent light leakage generated at the vicinity of the data line 171 and the gate line 121, and prevent light leakage at the region in which the first transistor Qa, the second transistor Qb, and the third transistor Qc are positioned.

Before the second light blocking member 330 is formed, the first passivation layer 180p, the color filter 230, and the second passivation layer 180q are positioned within the regions in which the first transistor Qa, the second transistor Qb, the third transistor Qc, and the first to third contact holes 185a, 185b, and 185c are positioned, so that it is possible to easily discriminate the positions of the first transistor Qa, the second transistor Qb, the third transistor Qc, and the first to third contact holes 185a, 185b, and 185c.

A first alignment layer 11 is positioned on the second light blocking member 330. The first alignment layer 11 may be a vertical alignment layer.

First and second alignment layers 11 and 21 may be formed to include at least one material that is generally used as a liquid crystal alignment layer such as a polyamic acid or a polyimide. The alignment layers 11 and 21 may include the reactive mesogen formed by the UV irradiation.

Next, the upper panel 200 will be described.

The common electrode 270 is formed on an insulating substrate 210. The second alignment layer 21 is formed on the common electrode 270. The second alignment layer 21 may be a vertical alignment layer, and may be formed of the same material as the described first alignment layer 11.

The liquid crystal layer 3 has negative dielectric anisotropy, and may include the first compound to the tenth compound as described above. Specifically, the ninth compound and the tenth compound may be formed on the alignment layers 11 and 21 through the UV irradiation process, and some thereof may remain in the liquid crystal layer 3. Particularly, the tenth compound may remain in the liquid crystal layer 3.

The liquid crystal molecules of the liquid crystal layer 3 are aligned so that long axes thereof are perpendicular to the surfaces of the two display panels 100 and 200 in a state in which there is no electric field.

A basic electrode 199 is described with reference to FIG. 5.

As illustrated in FIG. 5, a general shape of the basic electrode 199 is a quadrangle, and includes a cross-shaped stem portion including a horizontal stem portion 193, and a vertical stem portion 192 crossing the horizontal stem portion 193. Further, the basic electrode 199 is divided into a first subregion Da, a second subregion Db, a third subregion Dc, and a fourth subregion Dd by the horizontal stem portion 193 and the vertical stem portion 192, and each of the subregions Da to Dd includes a plurality of the first minute branches 194a, a plurality of the second minute branches 194b, a plurality of the third minute branches 194c, and a plurality of the fourth minute branches 194d.

The first minute branches 194a extend obliquely in an upper left direction from the horizontal stem portion 193 or the vertical stem portion 192, and the second minute branches 194b extend obliquely in an upper right direction from the horizontal stem portion 193 or the vertical stem portion 192. Further, the third minute branches 194c extend in a lower left direction from the horizontal stem portion 193 or the vertical stem portion 192, and the fourth minute branches 194d extend obliquely in a lower right direction from the horizontal stem portion 193 or the vertical stem portion 192.

The first to fourth minute branches 194a, 194b, 194c, and 194d form an angle of approximately 45 degrees (°) or 135° with gate lines 121 or the horizontal stem portion 193. Further, the minute branches 194a, 194b, 194c, and 194d of the two adjacent subregions Da, Db, Dc, and Dd may be orthogonal to each other.

Widths of the minute branches 194a, 194b, 194c, and 194d may be in the range of about 2.5 micrometers (µm) to about 5.0 µm, and a gap between the adjacent minute branches 194a, 194b, 194c, and 194d in one of subregions Da, Db, Dc, or Dd may be in the range of about 2.5 µm to about 5.0 µm.

According to another embodiment, the widths of the minute branches 194a, 194b, 194c, and 194d may be increased coming closer to the horizontal stem portion 193 or the vertical stem portion 192, and a difference between the widest portion and the narrowest portion in one minute branch 194a, 194b, 194c, or 194d may be in the range of about 0.2 µm to about 1.5 µm.

The first subpixel electrode 191a and the second subpixel electrode 191b are connected to the first drain electrode 175a and the second drain electrode 175b through the first contact hole 185a and the second contact hole 185b, respectively, and receive the data voltage from the first drain electrode 175a and the second drain electrode 175b, respectively. In this case, sides of the first to the fourth minute branches 194a, 194b, 194c, and 194d distort an electric field and form a horizontal component that determines an inclination direction of the liquid crystal molecules 31. The horizontal component of the electric field is almost horizontal to the sides of the first to fourth minute branches 194a, 194b, 194c, and 194d. Accordingly, as illustrated in FIG. 5, the liquid crystal molecules 31 are inclined in a direction parallel to the longitudinal direction of the minute branches 194a, 194b, 194c, and 194d. Since one pixel electrode 191 includes four subregions Da to Dd in which longitudinal directions of the minute branches 194a, 194b, 194c, and 194d are different from each other, the directions in which the liquid crystal molecules 31 are inclined are about four directions, and four domains, in which the alignment directions of the liquid crystal molecules 31 are different from each other, are formed in the liquid crystal layer 3. As described above, when the inclination direction of the liquid crystal molecules is diversified, a reference viewing angle of the liquid crystal display is increased.

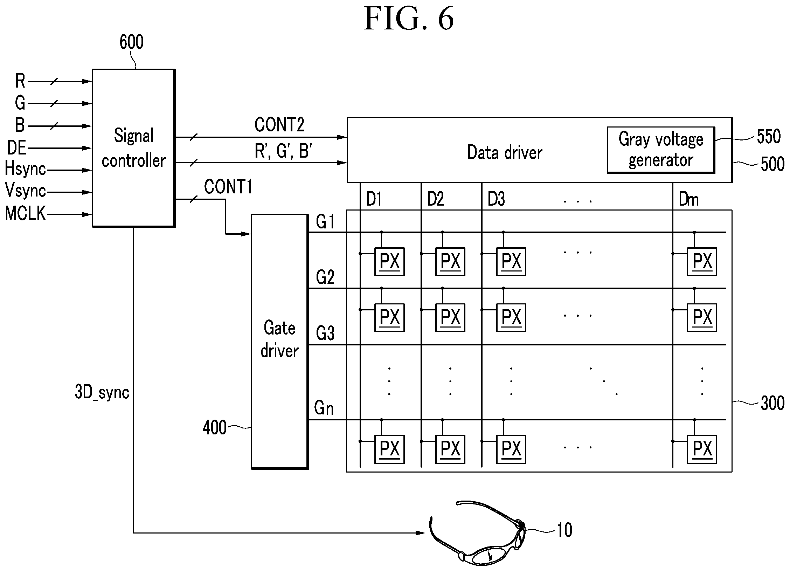

The above-described liquid crystal composition may be used in a stereoscopic image display device having a high speed response, and will be described with reference to FIG. 6. FIG. 6 is a block diagram of an exemplary embodiment of a stereoscopic image display device.

As illustrated in FIG. 6, the exemplary stereoscopic image display device includes glasses 10 that a user wears to view a 3-dimensional image, a liquid crystal display panel 300 for displaying an image, a data driver 500 and a gate driver 400 for driving the liquid crystal display panel 300, and a signal controller 600 for controlling the data driver 500 and the gate driver 400.

Hereinafter, each part is described in detail, and the liquid crystal display panel 300 is described first.

The liquid crystal display panel 300 includes a plurality of gate lines G1 to Gn and a plurality of data lines D1 to Dm. The plurality of gate lines G1 to Gn are extended in a horizontal direction, and the plurality of data lines D1 to Dm are extended in a vertical direction while crossing the plurality of gate lines G1 to Gn.

One of the gate lines G1 to Gn and one of the data lines D1 to Gm are connected with one pixel PX, and one pixel PX includes a switching element Q connected with the one of the gate lines G1 to Gn and the one of the data lines D1 to Dm. A control terminal of the switching element Q is connected with one of the gate lines G1 to Gn, an input terminal is connected with one of the data lines D1 to Dm, and an output terminal is connected with a pixel electrode. The pixel electrode forms one end of a liquid crystal capacitor. In an exemplary embodiment, one pixel may include two or more subpixels, and in this case, the subpixels each have separate pixel electrodes. Further, the respective subpixels may have separate switching elements Q, or may have a common switching element Q.

The liquid crystal display panel 300 may display a 3-dimensional image and a 2-dimensional image. The 3-dimensional image is divided into an image for a left eye and an image for a right eye for each frame to be displayed. As a result, the 3-dimensional image is driven at a higher frequency than that of the 2-dimensional image. In the present exemplary embodiment, the 2-dimensional image is displayed at about 60 Hertz (Hz), and the 3-dimensional image is displayed at about 120 Hz or about 240 Hz. However, in an exemplary embodiment, the display frequency may be changed. Here, a 3-dimensional image frequency for displaying the 3-dimensional image and a 2-dimensional image frequency for displaying the 2-dimensional image may be controlled to be operated at a predetermined frequency by the signal controller 600.

The conventional liquid crystal composition is generally used in a display device driven at 60 Hz and the performance may be deteriorated at 120 Hz or 240 Hz used to drive the stereoscopic image.

The signal controller 600 responds to image data R, G, and B and control signals of the image data R, G, and B, for example, a vertical synchronization signal Vsync, a horizontal synchronization signal Hsync, a main clock signal MCLK, and a data enable signal DE, input from the outside to appropriately process the image data R, G, and B and the control signals thereof in accordance with an operation condition of the liquid crystal display panel 300, and then generates and outputs image data R', G', and B', a gate control signal CONT1, a data control signal CONT2, and a clock signal.

The gate control signal COUNT1 includes a vertical synchronization start signal STV (hereinafter referred to as an "STV signal") instructing an output start of a gate-on pulse (a high section of a gate signal GS), and a gate clock signal CPV (hereinafter referred to as a "CPV signal") controlling an output time of the gate-on pulse.

The data control signal CONT2 includes a horizontal synchronization start signal ("STH") instructing an input start of the image data R', G', and B', and a load signal ("TP") instructing an application of corresponding data voltages to the data lines D1 to Dm.

In the meantime, the signal controller 600 outputs a glasses synchronization signal 3D_sync for turning on/off a left lens and a right lens of the glasses 10 in accordance with a display image of the liquid crystal display panel 300 to synchronize the glasses 10.

The plurality of gate lines G1 to Gn of the liquid crystal display panel 300 are connected with the gate driver 400, and the gate driver 400 alternately applies a gate-on voltage ("Von") and a gate-off voltage ("Voff") to the gate lines G1 to Gn according to the gate control signal CONT1 applied from the signal controller 600.

The plurality of data lines D1 to Dm of the liquid crystal display panel 300 are connected with the data driver 500, and the data driver 500 receives the data control signal CONT2 and the image data R', G', and B', from the signal controller 600. The data driver 500 converts the image data R', G', and B' to data voltages by using analog gray voltages generated in a gray voltage generator 550, and transmits the converted data voltages to the data lines D1 to Dm.

In an exemplary embodiment, the gray voltage generator 550 may be formed as a partial circuit within the data driver 500 or attached to an external side of the display panel 300 in a form of an integrated circuit or a chip. As a result, the data driver 500 does not receive an analog voltage from the outside but receives only a digital signal, thereby generating the data voltage which is an analog voltage.

When the switching element Q of each pixel PX of the liquid crystal display panel 300 is turned on, the data voltage is charged in the liquid crystal capacitor. A positive data voltage and a negative data voltage of the data voltage are alternately applied according to inversion driving by various methods. In this case, since the image for the left eye and the image for the right eye are alternately displayed in a case of the 3-dimensional image, a difference of charging rates between the image for the left eye and the image for the right eye is generated, so that a difference of displayed luminance is generated, and the user may view the luminance difference as a flicker. That is, the image for the left eye or the image for the right eye applied while the polarity is reversed from negative polarity to positive polarity does not have a sufficient charging time, so the charging rate deteriorates. Accordingly, the image for the left eye or the image for the right eye applied together with the reverse signal needs to be compensated for a deteriorating charging rate, and thereby is also referred to as an image for compensation. In the meantime, the image for the left eye or the image for the right eye, which is not the image for compensation, is referred to as an image for non-compensation. The image for compensation and the image for non-compensation may one-to-one correspond to the divided image for the left eye and image for the right eye. That is, in a case where the image for compensation is the image for the left eye, the image for non-compensation is the image for the right eye, and in a case where the image for non-compensation is the image for the left eye, the image for compensation is the image for the right eye.

In summary, the exemplary liquid crystal composition of the present invention may be applied to the display device providing the right eye image and the left eye image as described above, and as one example, as shown in FIG. 6, it may be applied to the glasses type of stereoscopic display device.

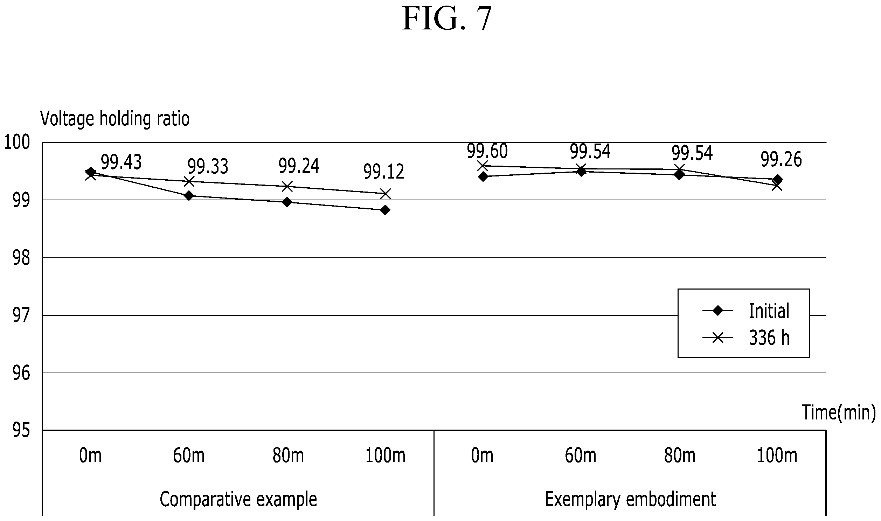

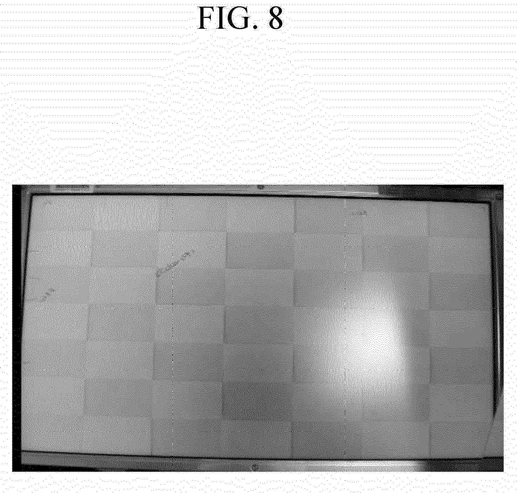

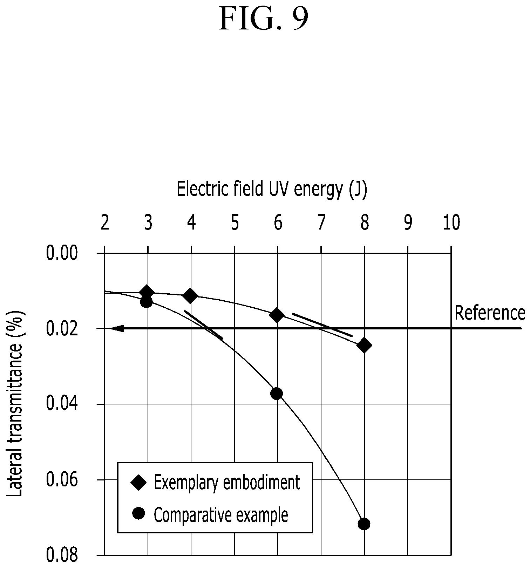

Next, an effect of the exemplary liquid crystal composition in a liquid crystal display will be described with reference to FIG. 7 to FIG. 9. FIG. 7 is a graph comparing a voltage holding ratio over time for a comparative example and an exemplary embodiment. FIG. 8 is a linear afterimage image of the comparative example, and FIG. 9 is a graph illustrating a pretilt change for the comparative example and the exemplary embodiment.

A change in the degree of a voltage holding ratio ("VHR") over time was compared for the exemplary liquid crystal display and the comparative liquid crystal display. The results are shown in FIG. 7.

Following an initial experiment for the exemplary liquid crystal display and the comparative liquid crystal display, it was confirmed that the exemplary liquid crystal display had a higher voltage holding ratio.

Next, after a passage of 336 hours (h), the voltage holding ratio was measured. In the exemplary liquid crystal display, the voltage holding ratio was about 99.6 after 336 hours, and the voltage holding ratio was about 99.26 after the passage of 100 minutes (min). In contrast, for the comparative liquid crystal display, the voltage holding ratio was about 99.43 after 336 hours and the voltage holding ratio was about 99.12 after the passage of 100 minutes.

That is, for the voltage holding ratio, regardless of the output time by the backlight member, it was confirmed that the exemplary liquid crystal display had the much better performance.

FIG. 8 shows the generated image of the linear afterimage for the comparative example.

As shown in FIG. 8, after about 504 hours, it was confirmed that the linear afterimage was generated for the comparative example. In contrast, it was confirmed that the linear afterimage was not generated after the passage of about 1000 hours for the exemplary liquid crystal display device.

Accordingly, in the exemplary liquid crystal display, the generation of the linear afterimage was also improved as well as the reliability of the liquid crystal layer.

Next, FIG. 9 shows a stain improvement degree of the exemplary display device. The graph of FIG. 9 shows the lateral transmittance (%) according to the electric field energy, and when the change in the degree of the lateral transmittance is sharp, it means that the stain is easily generated. That is, as the slope increases, the stain generation is also increased.

Referring to the exemplary liquid crystal display and the comparative liquid crystal display representing predetermined transmittance, the exemplary liquid crystal display has a smoother slope as compared with the comparative liquid crystal display. That is, FIG. 9 shows that the stain generated in the low gray was decreased for the exemplary liquid crystal display as compared with the comparative example.

Also, when measuring a peripheral stain of the liquid crystal display with the naked eye, the exemplary display device had a peripheral stain level of about 0.5, while the comparative example had a peripheral stain level of about 2.1. That is, it was confirmed that the peripheral stain was remarkably improved in the exemplary liquid crystal device.

In summary, as described above, the liquid crystal composition including each of the first compound to the tenth compound, is capable of providing the high speed response required for the 3D characteristics while having the predetermined physical properties. The reliability of the exemplary liquid crystal layer including the same may be improved, and the generation of the afterimage and the stain may be reduced.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A liquid crystal composition comprising:
a first category compound; and
a second category compound,
wherein the first category compound comprises a first compound represented by Chemical Formula 1 and a second compound represented by Chemical Formula 2: 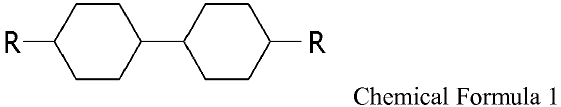 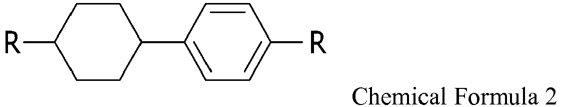 wherein each R is independently an alkyl group having a carbon number of 1 to 7, and each R is the same or different
**characterized in that**
the second category compound comprises a third compound represented by Chemical Formula 3 and a fourth compound represented by Chemical Formula 4: 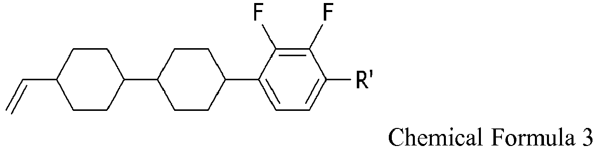 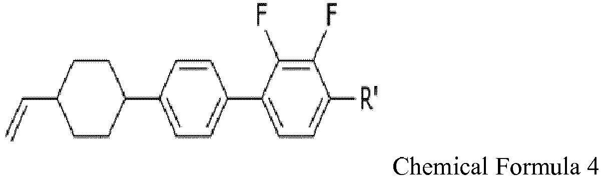 wherein R and R' are independently an alkyl group having a carbon number of 1 to 7, and R and R' are the same or different.

2. The liquid crystal composition of claim 1, wherein the second category compound further comprises at least one of a fifth compound represented by Chemical Formula 5, a sixth compound represented by Chemical Formula 6, a seventh compound represented by Chemical Formula 7, and an eighth compound represented by Chemical Formula 8: 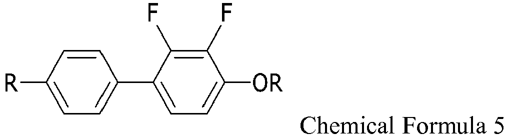 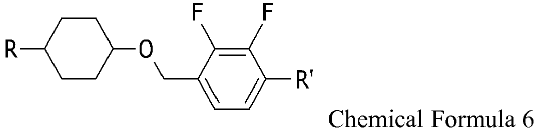 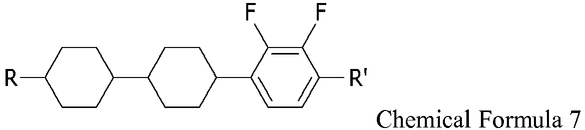 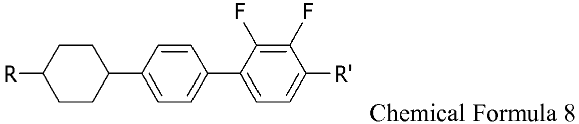 wherein R and R' are independently an alkyl group having a carbon number of 1 to 7, and R and R' are the same or different.

3. The liquid crystal composition of claim 2, further comprising a ninth compound represented by Chemical Formula 9 and a tenth compound represented by Chemical Formula 10,
wherein the liquid crystal composition comprises each of the first compound to the eighth compound :

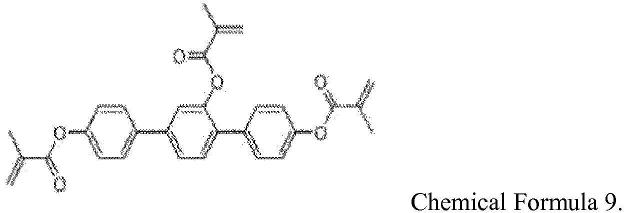

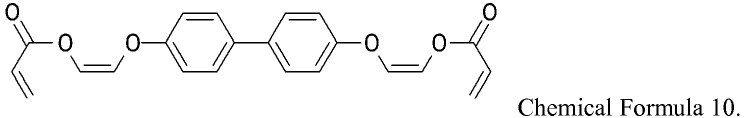

4. The liquid crystal composition of claim 1, wherein the R of the first compound and the R of the second compound are alkyl groups of two or more kinds having different carbon numbers.

5. The liquid crystal composition of claim 2, wherein a sum of an amount of the third compound, the fourth compound, the seventh compound, and the eighth compound is greater than about 35 wt%, and a sum of an amount of the third compound and the fourth compound is less than about 35 wt%, based on a total weight of the liquid crystal composition.

6. The liquid crystal composition of claim 5, wherein the sum of an amount of the ninth compound and the tenth compound is about 4000 ppm, and a weight ratio of the tenth compound to the ninth compound is greater than about 0.1.

7. A liquid crystal display comprising:
a first substrate;
a second substrate facing the first substrate;
a field generating electrode formed on at least one of the first substrate and the second substrate; and
a liquid crystal layer between the first substrate and the second substrate, wherein the liquid crystal layer comprises a liquid crystal composition according to claim 1.

8. The liquid crystal display of claim 7, wherein the second category compound comprises at least one of a fifth compound represented by Chemical Formula 5, a sixth compound represented by Chemical Formula 6, a seventh compound represented by Chemical Formula 7, and an eighth compound represented by Chemical Formula 8: 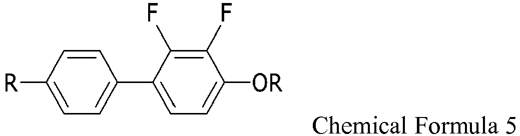 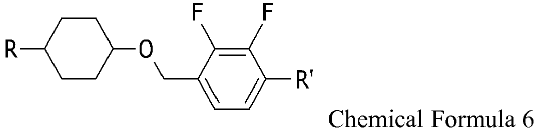 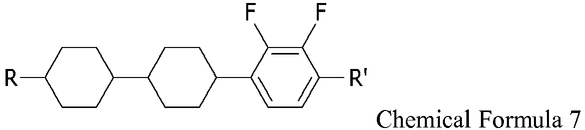 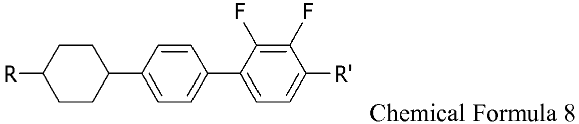 wherein R and R' are independently the alkyl group having a carbon number of 1 to 7, and R and R' are the same or different.

9. The liquid crystal display of claim 7, wherein the R of the first compound and the R of the second compound are alkyl groups of two or more kinds having different carbon numbers.

10. The liquid crystal display of claim 8, wherein the liquid crystal composition further comprises
a ninth compound represented by Chemical Formula 9 and
a tenth compound represented by Chemical Formula 10:

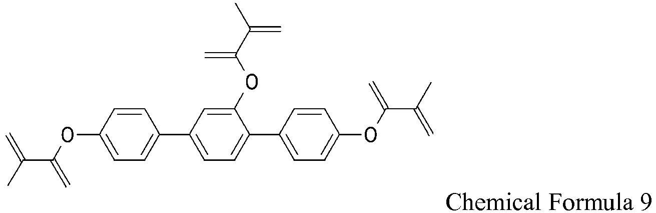

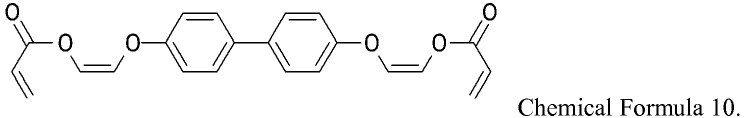

11. The liquid crystal display of claim 10, wherein:
the liquid crystal molecules comprise each of the first compound to the tenth compound, and wherein a sum of an amount of the third compound, the fourth compound, the seventh compound, and the eighth compound is greater than about 35 wt%; and a sum of an amount of the third compound and the fourth compound is less than about 35 wt%, based on a total weight of the liquid crystal composition.

12. The liquid crystal display of claim 11, wherein
an amount of the first compound is about 20 wt% to about 35 wt%,
an amount of the second compound is about 5 wt% to about 15 wt%,
an amount of the fifth compound is about 10 wt% to about 14 wt%, and
an amount of the sixth compound is about 5 wt% to about 9 wt%,
based on the total weight of the liquid crystal composition.

13. The liquid crystal display of claim 11, wherein
a sum of an amount of the ninth compound and the tenth compound is about 4000 ppm, and
a weight ratio of the tenth compound to the ninth compound is greater than about 0.1.

## Patentansprüche

1. Flüssigkristallzusammensetzung, umfassend:
eine Verbindung einer ersten Kategorie; und
eine Verbindung einer zweiten Kategorie,
wobei die Verbindung der ersten Kategorie eine erste Verbindung, welche durch die chemische Formel 1 dargestellt wird, und eine zweite Verbindung, die durch die chemische Formel 2 dargestellt wird, umfasst: 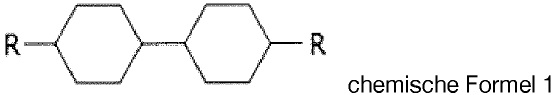 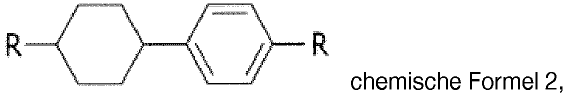 wobei jedes R unabhängig für eine Alkylgruppe mit einer Kohlenstoffzahl von 1 bis 7 steht und jedes R das gleiche oder verschiedenartig ist,
**dadurch gekennzeichnet, dass**
die Verbindung der zweiten Kategorie eine dritte Verbindung, welche durch die chemische Formel 3 dargestellt wird, und eine vierte Verbindung, die durch die chemische Formel 4 dargestellt wird, umfasst: 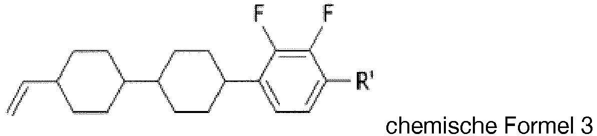 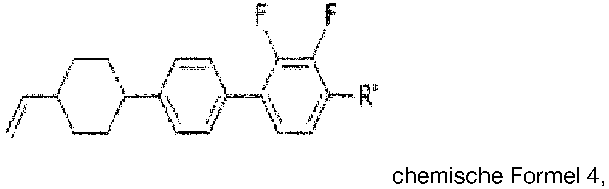 wobei R und R' unabhängig für eine Alkylgruppe mit einer Kohlenstoffzahl von 1 bis 7 stehen, und R und R' gleich oder voneinander verschieden sind.

2. Flüssigkristallzusammensetzung nach Anspruch 1, wobei die Verbindung der zweiten Kategorie mindestens eine aus einer fünften Verbindung, welche durch die chemische Formel 5 dargestellt wird, einer sechsten Verbindung, die durch die chemische Formel 6 dargestellt wird, einer siebten Verbindung, dargestellt durch die chemische Formel 7, und einer durch die chemische Formel 8 dargestellten achten Verbindung umfasst: 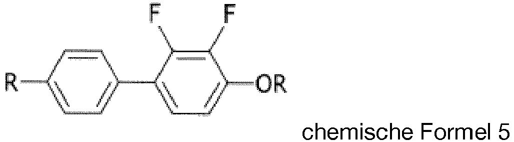 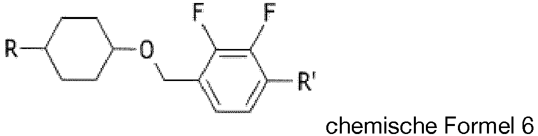 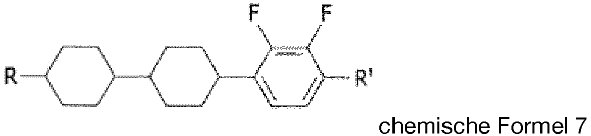 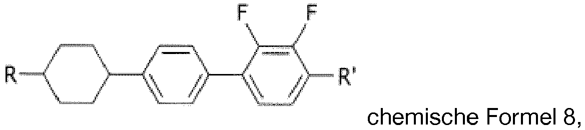 wobei R und R' unabhängig für eine Alkylgruppe mit einer Kohlenstoffzahl von 1 bis 7 stehen, und R und R' gleich oder verschiedenartig sind.

3. Flüssigkristallzusammensetzung nach Anspruch 2, ferner umfassend eine neunte Verbindung, welche durch die chemische Formel 9 dargestellt wird, und eine zehnte Verbindung, die durch die chemische Formel 10 dargestellt wird,
wobei die Flüssigkristallzusammensetzung jede von der ersten Verbindung bis zu der achten Verbindung umfasst:

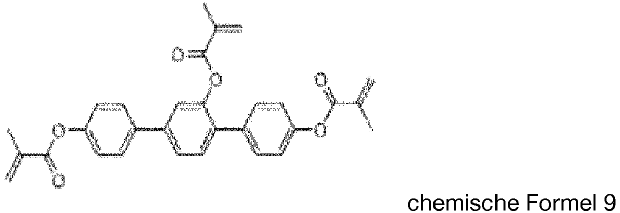

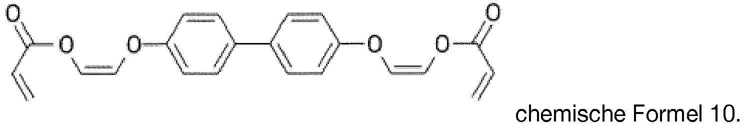

4. Flüssigkristallzusammensetzung nach Anspruch 1, wobei das R der ersten Verbindung und das R der zweiten Verbindung für Alkylgruppen von zwei oder mehr Arten mit verschiedenen Kohlenstoffzahlen stehen.

5. Flüssigkristallzusammensetzung nach Anspruch 2, wobei eine Summe einer Menge der dritten Verbindung, der vierten Verbindung, der siebten Verbindung und der achten Verbindung größer als etwa 35 Gew.-% ist und eine Summe einer Menge der dritten Verbindung und der vierten Verbindung geringer als etwa 35 Gew.% ist, basierend auf einem Gesamtgewicht der Flüssigkristallzusammensetzung.

6. Flüssigkristallzusammensetzung nach Anspruch 5, wobei die Summe einer Menge der neunten Verbindung und der zehnten Verbindung etwa 4000 ppm beträgt und ein Gewichtsverhältnis von der zehnten Verbindung zu der neunten Verbindung mehr als etwa 0,1 beträgt.

7. Flüssigkristallanzeige, umfassend:
ein erstes Substrat;
ein dem ersten Substrat gegenüberliegendes zweites Substrat;
eine feldgenerierende Elektrode, die auf mindestens einem aus dem ersten Substrat und dem zweiten Substrat ausgebildet ist; und
eine Flüssigkristallschicht zwischen dem ersten Substrat und dem zweiten Substrat, wobei die Flüssigkristallschicht eine Flüssigkristallzusammensetzung nach Anspruch 1 umfasst.

8. Flüssigkristallanzeige nach Anspruch 7, wobei die Verbindung der zweiten Kategorie mindestens eine aus einer fünften Verbindung, welche durch die chemische Formel 5 dargestellt wird, einer sechsten Verbindung, die durch die chemische Formel 6 dargestellt wird, einer siebten Formel, dargestellt durch die chemische Formel 7, und einer durch die chemische Formel 8 dargestellten achten Verbindung umfasst: 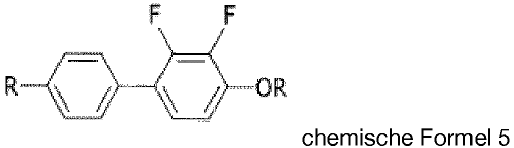 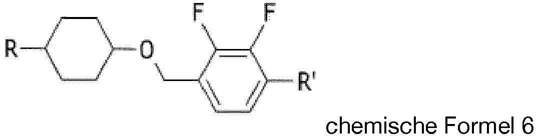 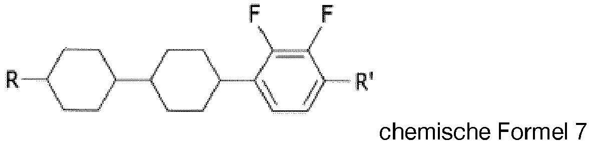 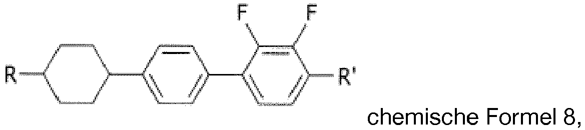 wobei R und R' unabhängig für eine Alkylgruppe mit einer Kohlenstoffzahl von 1 bis 7 stehen, und R und R' gleich oder verschiedenartig sind.

9. Flüssigkristallanzeige nach Anspruch 7, wobei das R der ersten Verbindung und das R der zweiten Verbindung für Alkylgruppen von zwei oder mehr Arten mit verschiedenen Kohlenstoffzahlen stehen.

10. Flüssigkristallanzeige nach Anspruch 8, wobei die Flüssigkristallzusammensetzung ferner umfasst:
eine neunte Verbindung, welche durch die chemische Formel 9 dargestellt wird, und
eine zehnte Verbindung, welche durch die chemische Formel 10 dargestellt wird:

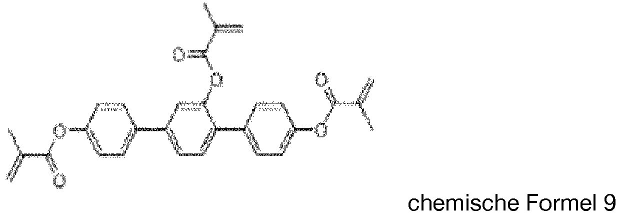

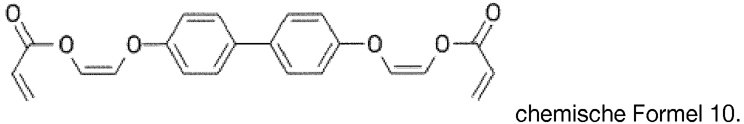

11. Flüssigkristallanzeige nach Anspruch 10, wobei:
die Flüssigkristallmoleküle jede von der ersten Verbindung bis zu der zehnten Verbindung umfassen, und wobei eine Summe einer Menge der dritten Verbindung, der vierten Verbindung, der siebten Verbindung und der achten Verbindung größer als etwa 35 Gew.% ist und eine Summe einer Menge der dritten Verbindung und der vierten Verbindung geringer als etwa 35 Gew.% ist, basierend auf einem Gesamtgewicht der Flüssigkristallzusammensetzung.

12. Flüssigkristallanzeige nach Anspruch 11, wobei:
eine Menge der ersten Verbindung etwa 20 Gew.-% bis etwa 35 Gew.% beträgt,
eine Menge der zweiten Verbindung etwa 5 Gew.-% bis etwa 15 Gew.% beträgt,
eine Menge der fünften Verbindung etwa 10 Gew.-% bis etwa 14 Gew.% beträgt und
eine Menge der sechsten Verbindung etwa 5 Gew.-% bis etwa 9 Gew.% beträgt,
basierend auf dem Gesamtgewicht der Flüssigkristallzusammensetzung.

13. Flüssigkristallanzeige nach Anspruch 11, wobei
eine Summe einer Menge der neunten Verbindung und der zehnten Verbindung etwa 4000 ppm beträgt und
ein Gewichtsverhältnis von der zehnten Verbindung zu der neunten Verbindung größer als etwa 0,1 ist.

## Revendications

1. Composition de cristaux liquides comprenant :
un composé de première catégorie ; et
un composé de deuxième catégorie,
dans laquelle le composé de première catégorie comprend un premier composé représenté par la formule chimique 1 et un deuxième composé représenté par la formule chimique 2 : 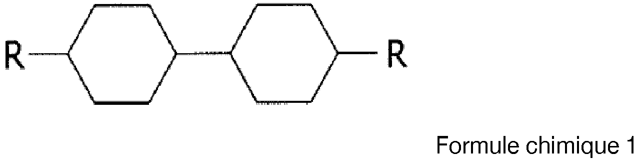 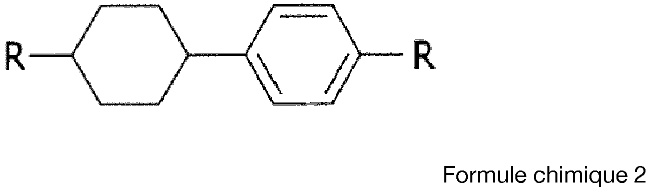 dans lesquelles chaque R représente indépendamment un groupe alkyle ayant un nombre de carbones de 1 à 7 et chaque R est identique ou différent,
**caractérisée en ce que**
le composé de deuxième catégorie comprend un troisième composé représenté par la formule chimique 3 et un quatrième composé représenté par la formule chimique 4 : 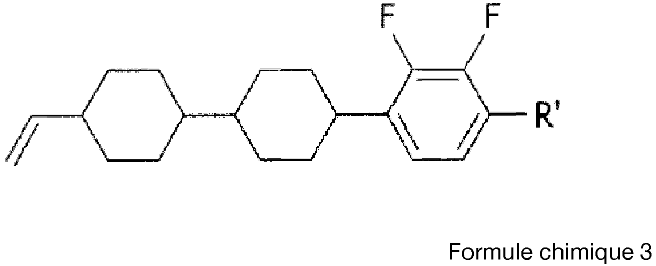 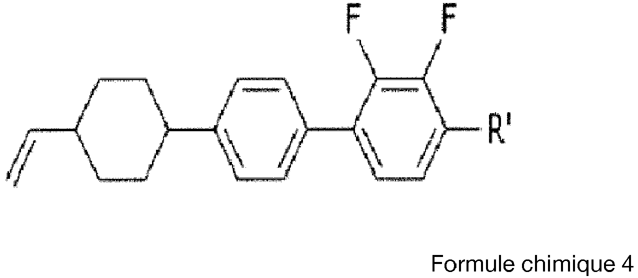 dans lesquelles R et R' représentent indépendamment un groupe alkyle ayant un nombre de carbone de 1 à 7 et R et R' sont identiques ou différents.

2. Composition de cristaux liquides selon la revendication 1, dans laquelle le composé de deuxième catégorie comprend en outre au moins un parmi un cinquième composé représenté par la formule chimique 5, un sixième composé représenté par la formule chimique 6, un septième composé représenté par la formule chimique 7 et un huitième composé représenté par la formule chimique 8: 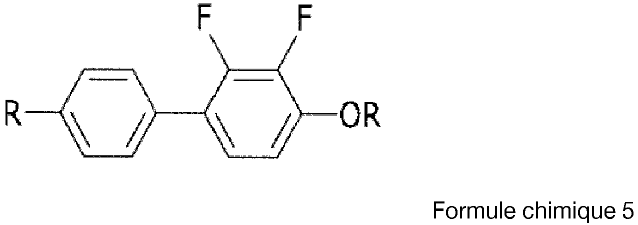 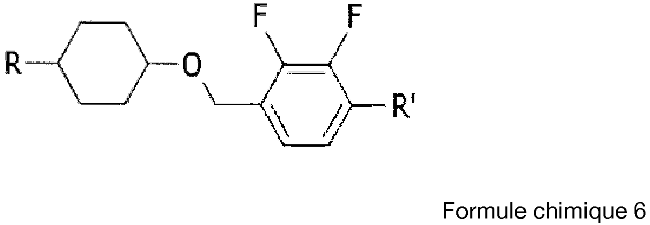 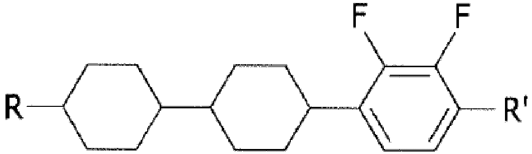 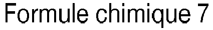 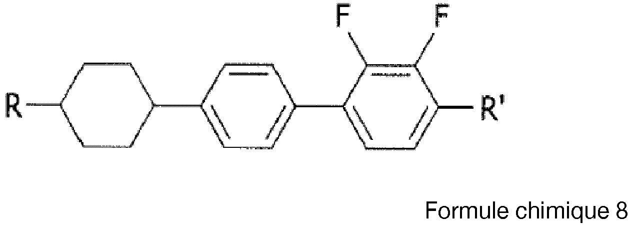 dans lesquelles R et R' représentent indépendamment un groupe alkyle ayant un nombre de carbone de 1 à 7 et R et R' sont identiques ou différents.

3. Composition de cristaux liquides selon la revendication 2, comprenant en outre un neuvième composé représenté par la formule chimique 9 et un dixième composé représenté par la formule chimique 10,
laquelle composition de cristaux liquides comprend chacun du premier composé au huitième composé :

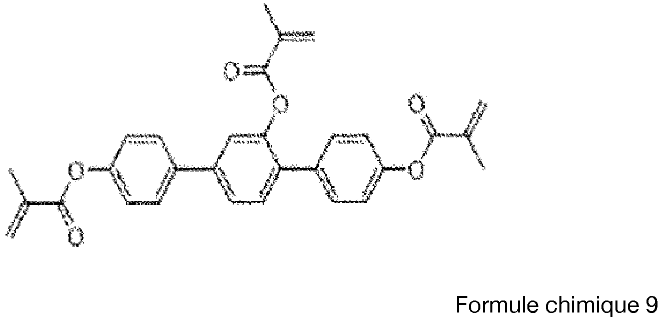

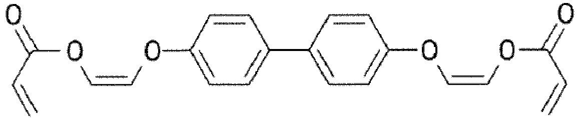

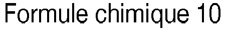

4. Composition de cristaux liquides selon la revendication 1, dans laquelle le R du premier composé et le R du deuxième composé sont des groupes alkyle de deux ou plusieurs types ayant des nombres de carbone différents.

5. Composition de cristaux liquides selon la revendication 2, dans laquelle une somme d'une quantité du troisième composé, du quatrième composé, du septième composé et du huitième composé est supérieure à environ 35 % en poids et une somme d'une quantité du troisième composé et du quatrième composé est inférieure à environ 35 % en poids, sur la base d'un poids total de la composition de cristaux liquides.

6. Composition de cristaux liquides selon la revendication 5, dans laquelle la somme d'une quantité du neuvième composé et du dixième composé est d'environ 4 000 ppm et un rapport pondéral entre le dixième composé et le neuvième composé est supérieur à environ 0,1.

7. Afficheur à cristaux liquides comprenant :
un premier substrat ;
un second substrat faisant face au premier substrat ;
une électrode génératrice de champ formée sur au moins l'un du premier substrat et du second substrat ; et
une couche de cristaux liquides entre le premier substrat et le second substrat, laquelle couche de cristaux liquides comprend une composition de cristaux liquides selon la revendication 1.

8. Afficheur à cristaux liquides selon la revendication 7, dans lequel le composé de deuxième catégorie comprend au moins un parmi un cinquième composé représenté par la formule chimique 5, un sixième composé représenté par la formule chimique 6, un septième composé représenté par la formule chimique 7 et un huitième composé représenté par la formule chimique 8 : 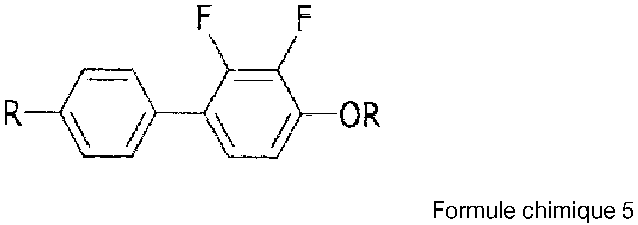 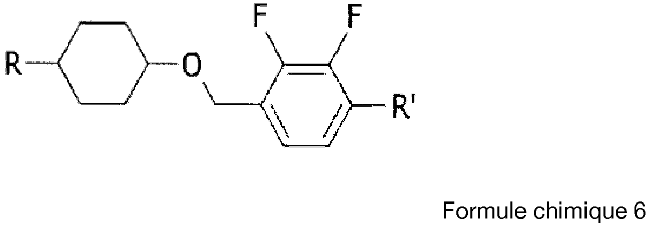 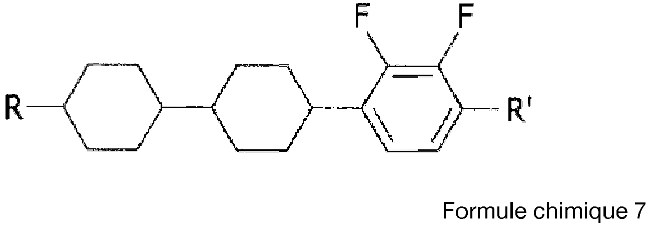 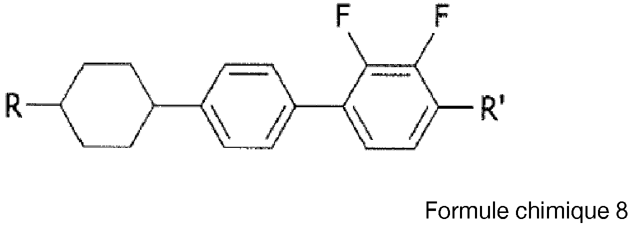 dans lesquelles R et R' représentent indépendamment un groupe alkyle ayant un nombre de carbone de 1 à 7 et R et R' sont identiques ou différents.

9. Afficheur à cristaux liquides selon la revendication 7, dans lequel le R du premier composé et le R du deuxième composé sont des groupes alkyle de deux ou plusieurs types ayant des nombres de carbone différents.

10. Afficheur à cristaux liquides selon la revendication 8, dans lequel la composition de cristaux liquides comprend en outre
un neuvième composé représenté par la formule chimique 9 et
un dixième composé représenté par la formule chimique 10 :

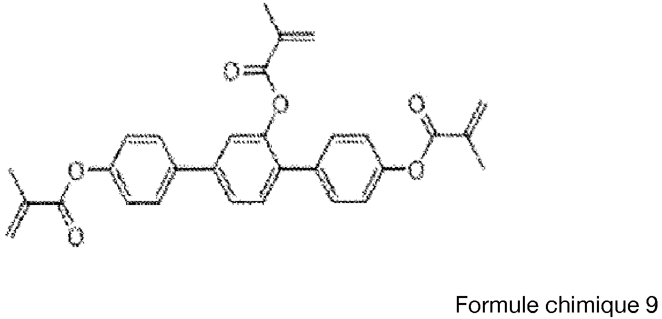

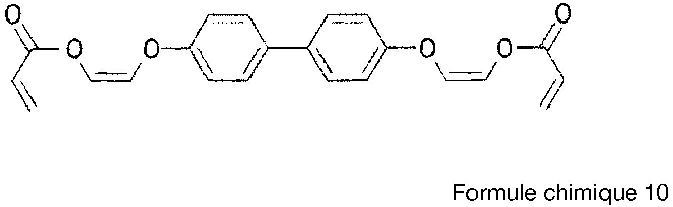

11. Afficheur à cristaux liquides selon la revendication 10, dans lequel :
les molécules de cristaux liquides comprennent chacun du premier composé au dixième composé, et dans lequel une somme d'une quantité du troisième composé, du quatrième composé, du septième composé et du huitième composé est supérieure à environ 35 % en poids ; et une somme d'une quantité du troisième composé et du quatrième composé est inférieure à environ 35 % en poids, sur la base d'un poids total de la composition de cristaux liquides.

12. Afficheur à cristaux liquides selon la revendication 11, dans lequel
une quantité du premier composé est d'environ 20 % en poids à environ 35 % en poids,
une quantité du deuxième composé est d'environ 5 % en poids à environ 15 % en poids,
une quantité du cinquième composé est d'environ 10 % en poids à environ 14 % en poids et
une quantité du sixième composé est d'environ 5 % en poids à environ 9 % en poids,
sur la base du poids total de la composition de cristaux liquides.

13. Afficheur à cristaux liquides selon la revendication 11, dans lequel
une somme d'une quantité du neuvième composé et du dixième composé est d'environ 4 000 ppm et
un rapport pondéral entre le dixième composé et le neuvième composé est supérieur à environ 0,1.
